(19) Europäisches Patentamt
European Patent Office
Office européen des brevets

(11) Veröffentlichungsnummer: **0 439 742 B1**

(12) **EUROPÄISCHE PATENTSCHRIFT**

(45) Veröffentlichungstag der Patentschrift: **01.06.94**

(51) Int. Cl.[5]: **C01B 17/54**, C01B 17/76

(21) Anmeldenummer: **90123549.9**

(22) Anmeldetag: **07.12.90**

(54) **Verfahren zur Herstellung von Oleum und Schwefelsäure.**

(30) Priorität: **28.01.90 DE 4002465**

(43) Veröffentlichungstag der Anmeldung:
**07.08.91 Patentblatt 91/32**

(45) Bekanntmachung des Hinweises auf die Patenterteilung:
**01.06.94 Patentblatt 94/22**

(84) Benannte Vertragsstaaten:
**BE DE ES FR GB IT NL SE**

(56) Entgegenhaltungen:
**EP-A- 0 071 078**
**EP-A- 0 244 206**
**CA-A- 1 198 261**
**FR-A- 2 162 185**

**U.H.F. Sander et al.: "Sulphur, sulpur dioxide and sulphuric acid" no. 170770, 1984, British Sulphur Corp. / Verlag Chemie Int., London (GB)**

**CHEMICAL ABSTRACTS, vol. 110, no. 14, 3 April 1989 Columbus, Ohio, USA L. Kaszub et al.: "Method of combustion sulfur to sulfur dioxide." Seite 170; ref. no. 117656 Z**

(73) Patentinhaber: **BAYER AG**

**D-51368 Leverkusen(DE)**

(72) Erfinder: **Brändle, Karl, Dr.**
**Waldstrasse 15**
**W-5060 Bergisch Gladbach 2(DE)**
Erfinder: **Eichenhofer, Kurt-Wilhelm, Dr.**
**Paul-Klee-Strasse 52**
**W-5090 Leverkusen(DE)**
Erfinder: **Geisler, Klaus, Dr.**
**Nittumer Weg 24**
**W-5060 Bergisch Gladbach 2(DE)**
Erfinder: **Pütz, Günter**
**Bismarckstrasse 193**
**W-5090 Leverkusen 1(DE)**
Erfinder: **Grabowski, Klaus-P.**
**Höferhof 7**
**W-5632 Wermelskirchen 2(DE)**

EP 0 439 742 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein Verfahren zur Herstellung von Oleum mit einer Konzentration von 10 bis 45 Gew.-% $SO_3$ und/oder Schwefelsäure mit einer Konzentration von 96 bis 100 Gew.-% $H_2SO_4$ durch Verbrennung von Schwefel mit Luftsauerstoff, Umsetzung der $SO_2$-haltigen Gase zu $SO_3$-haltigen Gasen an Vanadiumkontakten und Absorption der $SO_3$-haltigen Gase zur Erzeugung von Oleum und/oder Schwefelsäue.

Aus der Literatur sind unterschiedliche Verfahren zur Herstellung von Oleum oder Schwefelsäure bekannt und ausführlich beschrieben.

Bei den thermischen Prozessen (Schwefelverbrennung mit Luftsauerstoff, Pyritröstung, Schwefelsäurespaltung) werden neben schwefeldioxidhaltigen Gasen auch Stickoxide $(NO)_x$ gebildet. Diese Stickoxide werden wie die schwefeltrioxidhaltigen Gase, die am Vanadiumkontakt aus den $SO_2$-haltigen Gasen gebildet werden, absorbiert, so daß die gebildete Schwefelsäure oder das Oleum mit absorbiertem $(NO)_x$ verunreinigt ist. Für viele Anwendungen sollte die Schwefelsäure oder das Oleum jedoch möglichst frei von absorbiertem $(NO)_x$ sein. Außerdem führen die in Oleum oder Schwefelsäure absorbierten Anteile an $(NO)_x$ zu einer erhöhten Korrosion der Stahlteile in den Schwefelsäureanlagen. Es hat daher nicht an Versuchen gefehlt, diese Verunreinigungen aus der Schwefelsäure bzw. aus Oleum zu beseitigen.

So kann nitrosefreie Schwefelsäure einer Konzentration >80 Gew.-% durch Zugabe von Hydrazinverbindungen bei 50 °C bis 100 °C hergestellt werden (DE-A-1 792 348). Das Verfahren der Zugabe von wäßrigen Hydrazinsulfatlösungen ist zwar grundsätzlich geeignet, es hat sich jedoch herausgestellt, daß bei höheren absorbierten $(NO)_x$-Gehalten Nebenreaktionen mit Hydrazinsulfat ablaufen, die eine Verringerung des $(NO)_x$-Gehaltes lediglich vortäuschen. Des weiteren ist dieses Verfahren sehr kostspielig.

Weiterhin ist bekannt, daß zur Entfernung salpetriger Säure aus Abfallschwefelsäuren monomere oder polymere $NH_2$-Gruppen aufweisende Verbindungen zugesetzt werden (DE-A-2 831 941). Als geeignete Verbindungen werden bevorzugt Hydroxylammoniumsulfat, Harnstoff oder Amidosulfonsäure verwendet. Dieses Verfahren kann jedoch nur für Schwefelsäuren mit einer Konzentration von ca. 50 bis 90 Gew.-% durchgeführt werden. Außerdem verursacht z.B. die Verwendung der besonders aktiven Amidosulfonsäure hohe Kosten. Des weiteren ist in beiden oben genannten Verfahren der analytische Aufwand zur Überwachung des Stickstoffgehaltes in der Schwefelsäure zur Vermeidung von Unter- oder Überdosierung der zugesetzten Verbindungen sehr hoch.

CA-A 1 198 261 beschreibt ein Verfahren zur Herstellung von flüssigem $SO_2$ durch Verbrennung von Schwefel und rezyklierten $SO_2$-haltigen Gasen mit Luft bei T <1200 °C und einer Teilverflüssigung von $SO_2$ aus einem Teilstrom. Es wird darauf hingewiesen, daß $SO_3$ und $(NO)_x$ sehr schwierig zu entfernen sind. Es wird daher eine Verbrennung unter 1200 °C vorgeschlagen. Verbrennungsbedingungen von 1000 °C sind bekannt und stellen sich bei 10 bis 12 % selbst ein. Das Gas enthält 3 bis 6 g $SO_3/m^3$ und bis zu 20 ppm Stickoxid. Durch das Rückführen der Gase nach der Verflüssigung wird eine niedrigere Brennkammertemperatur durch den höheren Inertgasanteil erreicht, als sie sich aus der Verbrennung von reiner Luft mit Schwefel ergeben würde.

In Chemical Abstracts 110: 117656z wird in einen $SO_2$-haltigen Teilgasstrom mit 10 bis 11 % $SO_2$ und bei 1100 °C, der einem Schwefelverbrennungsofen entnommen wurde, Schwefel verdampft, wobei ein Gasstrom mit 19 bis 20 % $SO_2$und einer Temperatur von 600 bis 700 °C unter Verbrennung des Schwefels entsteht. Anschließend wird diesem Gas Luft zugemischt, und das Gas in den Schwefelverbrennungsofen zurückgeführt, wo unverbrannter Schwefel zu $SO_2$ verbrennt.

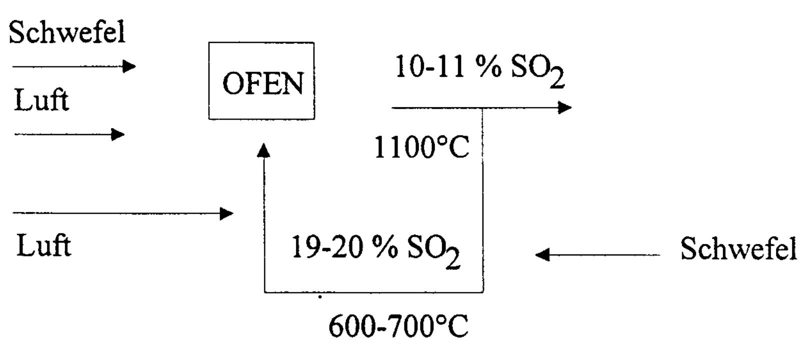

Aufgabe war es daher, den Gehalt der bei der Schwefelverbrennung zur Herstellung von Oleum und/oder Schwefelsäure gebildeten und in Oleum und/oder Schwefelsäure absorbierten, nitrolen Gase zu reduzieren.

Diese Aufgabe konnte mit dem erfindungsgemäßen Verfahren gelöst werden.

Gegenstand der Erfindung ist ein Verfahren zur kontinuierlichen Herstellung von Oleum einer Konzentration von 10 bis 45 Gew.-% $SO_3$ und/oder Schwefelsäure einer Konzentration von 94 bis 100 Gew.-% $H_2SO_4$ durch Verbrennung von Schwefel mit Luftsauerstoff ach dem Prinzip der über- oder unterstöchiometrischen Verbrennung, Abkühlung der entstandenen schwefeldioxidhaltigen Gase auf 390 °C bis 480 °C, katalytische Umsetzung dieser abgekühlten Gase zu schwefeltrioxidhaltigen Gasen an einem Vanadiumhaltigen Kontakt unter Anwendung des Prinzips der Einfach- oder Doppelkontaktkatalyse, Absorption der schwefeltrioxidhaltigen Gase nach Abkühlung, gegebenenfalls Abtrennung von Flüssigkeiten aus den Gasen nach der Absorption und Energierückgewinnung, dadurch gekennzeichnet, daß die Verbrennung von Schwefel mit Luftsauerstoff unter Zusatz von trockenen $SO_2$-haltigen Gasen, die nicht aus dieser Verbrennung von Schwefel mit Luftsauerstoff stammen und die bis zu 5000 ppm $(NO)_x$, bevorzugt unter 2000 ppm $(NO)_x$, berechnet als NO, enthalten, durchgeführt wird.

Die trockenen $SO_2$-haltigen Gase enthalten normalerweise mehr als 50 ppm $(NO)_x$, berechnet als NO.

Bevorzugt werden als $SO_2$-haltige, trockene Gase, die bis zu 5.000 ppm $(NO)_x$, berechnet als NO, enthalten können, trockene Spaltgase aus der thermischen Spaltung von Abfallschwefelsäuren eingesetzt, wobei diese Spaltgase bevorzugt 5 bis 10 Vol.-% $O_2$, 5 bis 8 Vol.-% $SO_2$, <200 ppm CO, <1.000 ppm $(NO)_x$, <50 ppm Kohlenwasserstoffverbindungen und 82 bis 90 Vol.-% $H_2O$, $N_2$ und $CO_2$ enthalten.

In einer weiteren Variante des Verfahrens werden als $SO_2$-haltige, trockene Gase, die bis zu 5.000 ppm $(NO)_x$ enthalten können, Verbrennungsgase aus der Verbrennung von schwefelhaltigen Materialien eingesetzt.

Bevorzugt liegt das Verhältnis der $SO_2$-Menge aus den zugesetzten trockenen $SO_2$-haltigen Gasen zur gebildeten $SO_2$-Menge aus der Schwefelverbrennung zwischen 1:5 und 3:1.

Für die erfindungsgemäße Durchführung des Verfahrens können die trockenen $SO_2$-haltigen Gase, die bis zu 5.000 ppm $(NO)_x$ enthalten können, direkt in den Brennraum, in dem die Verbrennung von Schwefel mit Sauerstoff durchgeführt wird, eingetragen werden oder nach Abmischung mit der Verbrennungsluft in den Brennraum eingetragen werden. Wichtig ist, daß die $SO_2$-haltigen Gase, die bis zu 5.000 ppm $(NO)_x$ enthalten können, (nitrosehaltige $SO_2$-haltige Gase) gemeinsam mit dem Schwefel verbrannt werden. Mit dem erfindungsgemäßen Verfahren können bis zu 95 Gew.-% der gesamten Stickoxide entfernt werden.

In einer bevorzugten Verfahrensvariante wird die Verbrennung von Schwefel bei Temperaturen zwischen 500 °C und 1.000 °C (gemessen am Ausgang des Brennraumes vor Abkühlung der Gase), bevorzugt zwischen 700 °C und 950 °C, durchgeführt.

Bevorzugt wird die Absorption der schwefeltrioxidhaltigen Gase in Oleum einer Konzentration von 15 bis 45 Gew.-% $SO_3$, vorzugsweise 20 bis 30 Gew.-% $SO_3$, durchgeführt.

Die bei der Schwefelverbrennung freiwerdende Energie kann in üblicher Weise unter Bildung von Naßdampf unterschiedlicher Druckstufen zurückgewonnen werden.

Die aus den Gasen nach der Absorption abgetrennten Flüssigkeiten können in Schwefelsäureaufarbeitungsanlagen, bevorzugt Schwefelsäurespaltanlagen, zurückgeführt werden.

Die Bedingungen der Kontaktierung für die Durchführung des Verfahrens sind unkritisch. Im Rahmen der Absorption von $SO_3$ zu Oleum sind die technisch bekannten Durchführungsformen zur Konzentrationsregelung anzuwenden.

In der Abbildung 1 ist eine mögliche Durchführungsform des erfindungsgemäßen Verfahrens aufgezeigt, ohne daß das erfindungsgemäße Verfahren darauf eingeschränkt werden soll:

| | |
|---|---|
| 1 | Lufttrockner |
| 2 | Gastrockner |
| 3 | Gebläse |
| 4 | Wärmetauscher |
| 5 | Schwefelbrenner |
| 6 | Wärmetauscher |
| 7 | Vorkontakt |
| 8 | Wärmetauscher |
| 9 | Verschleißwärmetauscher |
| 10 | Oleumabsorber |
| 11 | Zwischenabsorber |
| 12 | Filter |
| 13 | Nachkontakt |
| 14 | Endabsorber |

15 Filter
16 Flüssigkeit
17 Luft
18 $SO_2$-haltiges Gas
19 Schwefel
20 Oleum
21 Schwefelsäure
22 Kaminabgas

Das erfindungsgemäße Verfahren soll weiterhin anhand der folgenden Beispiele näher erläutert werden, ohne daß hierin eine Einschränkung zu sehen ist.

Beispiel 1

In einer technischen Anlage zur Erzeugung von Oleum der Konzentration 15 bis 38 Gew.-% freies $SO_3$ und Schwefelsäure der Konzentration 95,5 bis 99,0 Gew.-% $H_2SO_4$ auf der Basis der Verbrennung von Elementarschwefel unter Anwendung der überstöchiometrischen Schwefelverbrennung, des Doppelkontaktverfahrens sowie der Doppelabsorption werden 18.600 $Nm^3$/h $SO_2$-haltiges Gas mit einer Temperatur von 62 °C, einem Gehalt von 6,3 Vol.-% $SO_2$, 5,3 Vol.-$O_2$ und 200 mg NO/$Nm^3$ (Rest $CO_2$ und $N_2$), welches in einem Gastrockner mit 96,7 gew.-%iger Schwefelsäure getrocknet wurde, mit Luft, die bei 42 °C in einem Luft-trockner getrocknet wurde, zu einer Gesamtgasmenge von 46.000 $Nm^3$/h gemischt. Dieses Gemisch wird von einem Gebläse angesaugt. Das in einem Wärmetauscher unter Nutzung der Wärme von Horden auf 263 °C erwärmte $SO_2$-haltige Gasgemisch wird in einem Schwefelbrenner mit 4,42 t/h feinverteiltem, flüssigemn Schwefel vermischt und verbrannt. Die Verteilung des flüssigen Schwefels erfolgt über einen Düsenstock mit aufgesetzter Düse. Das 920 °C heiße Gas wird auf 435 °C abgekühlt und einem Vorkontakt bestehend aus 3 Festbetthorden zugeführt. Das in Horde 1 eintretende Gas hat folgende Zusammensetzung: 8,5 Vol-% $SO_2$, 9,5 Vol-% $O_2$, 38 mg NO/$Nm^3$ (Rest $CO_2$ und $N_2$), was einem NO-Abbau von 53 % entspricht.

Nach Verlassen der 3. Horde mit einer Temperatur von 512 °C wird das $SO_3$- und $SO_2$-haltige Gas in einem weiteren Wärmetauscher und in einem Verschleißwärmetauscher auf 215 °C abgekühlt.Ein Teilgasstrom von ca. 50 % wird der Oleumabsorption zugeführt. Die Zusammensetzung des umlaufenden Oleums (62 °C) lag bei 20,7 Gew.-% freiem $SO_3$, 12 ppm N (bestimmt nach Devarda) und 28 ppm N (bestimmt nach Kjelldahl). Der verbliebene Teilgasstrom wird zusammen mit dem Gasstrom aus der Oleumabsorption dem Zwischenabsorber, in dem eine Schwefelsäure mit einer Vorlagenkonzentration von 98,95 Gew.-% $H_2SO_4$ und einer Temperatur von 82 °C vorliegt, zugeleitet. Das restliche $SO_3$ wird hier vollständig absorbiert. Das verbleibende $SO_2$-haltige Gas wird in Wärmetauschern auf eine Temperatur von 440 °C gebracht und in einer weiteren Horde im Nachkontakt oxidiert. Nach Reaktion des restlichen $SO_2$ verläßt das Gas mit 420 °C die Horde, wird im Wärmetauscher abgekühlt und in den Endabsorber eingeleitet (Vorlage: 99,9 Gew.-% $H_2SO_4$ und 87 °C). Nach Absorption des $SO_3$ wird das Gas in einem Brinkmistfilter gereinigt und mit einem Gehalt von 146 ppm $SO_2$ emittiert. In den Absorbern liegt der Wert für Nitrit bei $<1$ mg/kg Oleum bzw. Schwefelsäure. Das anfallende Oleum wird dem Zwischenabsorber zugeleitet. Die Gesamtproduktion von ca. 358 Tagestonnen $SO_3$ wird als 98,95 gew.-%ige $H_2SO_4$ abgegeben. Die im Verschleißwärmetauscher anfallende Flüssigkeit aus $H_2SO_4$ mit ca. 2,5 % Nitrosylschwefelsäure in einer Menge von ca. 9 1/24 h wird zusammen mit den Filterabläufen der Säurespaltung zugeleitet. Es werden 14 t/h 30 bar Dampf/300 °C erzeugt.

Beispiel 2

Analog Beispiel 1 wurden 2,6 t/h Flüssigschwefel mit 25.600 $Nm^3$ $SO_2$-haltigem Gas der Zusammensetzung 6,4 Vol-% $SO_2$, 5,0 Vol.-% $O_2$, 200 mg NO/$Nm^3$ (Rest $N_2$ und $CO_2$) und mit Luft in einer Gesamtgasmenge von 47.000 $Nm^3$/h verarbeitet. Die Ofentemperatur im Brenner lag bei 760 °C und die Zusammensetzung des 446 °C heißen Gases am Eingang der Horde 1 lag bei 8,1 Vol.-% $SO_2$, 7,1 Vol.-% $O_2$, und 28 mg NO/$Nm^3$ (Rest $N_2$ und $CO_2$), was einem Abbau an NO von 74 %, bezogen auf den NO-Gehalt des eingesetzten $SO_2$-haltigen Gases, entspricht (der $NO_2$-Anteil liegt bei ca. 1 bis 2 mg/$Nm^3$). Die Absorber hatten folgende Einstellungen in den Vorlagen: 26,7 Gew.-% Oleum, 99,07 Gew.-% $H_2SO_4$,99,04 Gew.-% $H_2SO_4$. Die Emission lag bei 130 ppm $SO_2$. Es wurden 300 Tagestonnen $SO_3$ als 99,07 gew.-%ige $H_2SO_4$ erzeugt. Die Dampfmenge an 30 bar Dampf lag bei 8,5 t/h.

Beispiel 3

Analog Beispiel 1 wurden 4,2 t/h Flüssigschwefel mit 24.400 $Nm^3$ $SO_2$-haltigem Gas der Zusammensetzung 6,9 Vol.-% $SO_2$, 5,6 Vol.-% $O_2$ und 150 mg $NO/Nm^3$ (Rest $CO_2$ und $N_2$) und mit Luft einer Gesamtgasmenge von 47.000 $Nm^3/h$ verarbeitet. Die Ofentemperatur im Brenner lag bei 930 °C und die Zusammensetzung des 454 °C heißen Gases am Eingang der Horde 1 des Vorkontaktes bei 9,2 Vol.-% $SO_2$, 8,0 Vol-% $O_2$ und 27 ppm $NO/Nm^3$, was einem Abbau an NO von 65 %, bezogen auf den NO-Gehalt des eingesetzten $SO_2$-haltigen Gases entspricht. Die Absorber wiesen folgende Einstellungen in den Vorlagen auf: 24,70 Gew.-% Oleum mit einem Gehalt von 7 ppm N (bestimmt nach Devarda) und 19 ppm N (bestimmt nach Kjelldahl); 99,05 Gew.-% $H_2SO_4$; 99,10 Gew.-% $H_2SO_4$. Die Emission lag bei 230 ppm $SO_2$. Es wurden 400 t $SO_3$/24 h als 99,10 gew.-%ige $H_2SO_4$ erzeugt. Die Dampfmenge an 30 bar Dampf lag bei 14 t/h.

Beispiel 4

Erzeugung von $SO_2$-haltigen Gasen aus der Schwefelsäurespaltung

In einem mit Heizöl S (1,8 Gew.-% Schwefel) beheizten ausgemauerten Ofen wird 68 gew.-%ige Abfallschwefelsäure mit einem Salzgehalt von 0,5 Gew.-% eingespeist. Die Ofentemperatur beträgt 1.050 °C. Pro Zeiteinheit werden folgende Mengen durchgesetzt:

| | |
|---|---|
| Luft | 12.000 $m^3$ |
| Heizöl | 1.000 kg |
| Spaltsäure | 7.000 kg |

Gleichzeitig wird ein Abgas aus einer organischen Zwischenproduktion in einer Menge von 50 $m^3$ pro Zeiteinheit zugeführt:

| | |
|---|---|
| $SO_2$ | 45 Vol.-% |
| Kohlenwasserstoff-Verbindungen | 2,5 Vol.-% |
| $N_2$, $O_2$ | 52,5 Vol.-% |

Der Wirkungsgrad bezüglich der Umsetzung $H_2SO_4 \rightarrow H_2 + SO_2 + 1/2\ O_2$ beträgt 98 % der Theorie. Das den Spaltofen verlassende Gas wird in einem Rekuperator auf 800 °C abgekühlt. Die zur Kühlung benutzte Brennerluft wird dabei auf 420 °C aufgeheizt. In einer Naßquenche wird das heiße Spaltgas durch Zuführung eines Wasserüberschusses auf 80 °C abgekühlt. Niedergeschlagenes Wasser wird über eine Stripvorrichtung entfernt. Das ca. 80 °C warme, wasserdampfgesättigte Gas tritt in einen Füllkörperwaschturm ein, der im Gleich- oder Gegenstrom betrieben werden kann. Als Waschflüssigkeit dient eine 2 gew.-%ige Schwefelsäure. Die fühlbare Wärme wird durch externe, indirekte Wasserkühlung abgeführt. Niedergeschlagene Flüssigkeiten werden über eine Stripvorrichtung aus dem System entfernt. Das das Waschsystem verlassende 35 °C warme Gasgemisch, das folgende Zusammensetzung aufweist:

| | |
|---|---|
| $O_2$ | 6,5 Vol.-% |
| $SO_2$ | 6,0 Vol.-% |
| $NO_x$ | 125 ppm |
| CH-Verb. | <1 ppm |
| $H_2O$, $CO_2$, $N_2$ | 87,5 Vol.-% |

wird einer Nachreinigung (Naß-EGR) zugeführt und mit Schwefelsäure einer Konzentration von 97,5 Gew.-% getrocknet.

## Patentansprüche

1. Verfahren zur kontinuierlichen Herstellung von Oleum einer Konzentration von 10 bis 45 Gew.-% $SO_3$ und/oder Schwefelsäure einer Konzentration von 94 bis 100 Gew.-% $H_2SO_4$ durch Verbrennung von Schwefel mit Luftsauerstoff nach dem Prinzip der über- oder unterstöchiometrischen Verbrennung, Abkühlung der entstandenen schwefeldioxidhaltigen Gase auf 390 °C bis 480 °C, katalytische Umsetzung dieser abgekühlten Gase zu schwefeltrioxidhaltigen Gasen an einem Vanadium-haltigen Kontakt unter Anwendung des Prinzips der Einfach- oder Doppelkontaktkatalyse, Absorption der schwefeltrioxidhaltigen Gase nach Abkühlung, gegebenenfalls Abtrennung von Flüssigkeiten aus den Gasen nach der Absorption und Energierückgewinnung, dadurch gekennzeichnet, daß die Verbrennung von Schwefel mit Luftsauerstoff unter Zusatz von trockenen $SO_2$-haltigen Gasen, die nicht aus dieser Verbrennung von Schwefel mit Luftsauerstoff stammen und die bis zu 5000 ppm $(NO)_x$, bevorzugt unter 2000 ppm $(NO)_x$, berechnet als NO, enthalten, durchgeführt wird.

2. Verfahren nach Anspruch 1, dadurch gekennzeichnhet, daß als trockene $SO_2$-haltige Gase, die bis zu 5000 ppm $(NO)_x$, berechnet als NO, enthalten können, trockene Spaltgase aus der thermischen Spaltung von Abfallschwefelsäuren eingesetzt werden.

3. Verfahren nach Anspruch 2, dadurch gekennzeichnet, daß die Spaltgase 5 bis 10 Vol.-% $O_2$, 5 bis 8 Vol.-% $SO_2$, $<200$ ppm CO, $<1000$ ppm $(NO)_x$, $<50$ ppm Kohlenwasserstoffverbindungen und 82 bis 90 Vol.-% $H_2O$, $N_2$ und $CO_2$ enthalten.

4. Verfahren nach Anspruch 1, dadurch gekennzeichnet, daß als trockene $SO_2$-haltige Gase, die bis zu 5000 ppm $(NO)_x$ enthalten können, Verbrennungsgase aus der Verbrennung von schwefelhaltigen Materialien eingesetzt werden.

5. Verfahren nach Anspruch 1, dadurch gekennzeichnet, daß das Verhältnis der $SO_2$-Menge aus den zugesetzten trockenen $SO_2$-haltigen Gasen zu der $SO_2$-Menge aus der Schwefelverbrennung zwischen 1:5 und 3:1 liegt.

6. Verfahren nach Anspruch 1, dadurch gekennzeichnet, daß die Zuführung der trockenen $SO_2$-haltigen Gase, die bis zu 5000 ppm $(NO)_x$ enthalten können, direkt in den Brennraum der Schwefelverbrennung erfolgt.

7. Verfahren nach Anspruch 1, dadurch gekennzeichnet, daß die trockenen $SO_2$-haltigen Gase mit der Verbrennungsluft gemischt werden und das Gasgemisch in den Brennraum der Schwefelverbrennung eingetragen wird.

8. Verfahren nach Anspruch 1, dadurch gekennzeichnet, daß die Verbrennung von Schwefel bei Temperaturen zwischen 500 °C und 1000 °C (gemessen am Ausgang des Brennraumes vor Abkühlung der Gase), bevorzugt zwischen 700 °C und 950 °C, durchgeführt wird.

9. Verfahren nach Anspruch 1, dadurch gekennzeichnet, daß die Absorption der $SO_3$-haltigen Gase in Oleum einer Konzentration von 15 bis 40 Gew.-% $SO_3$, bevorzugt 20 bis 30 Gew.-% $SO_3$, durchgeführt wird.

10. Verfahren nach Anspruch 1, dadurch gekennzeichnet, daß die abgetrennten Flüssigkeiten aus den Gasen in Schwefelsäureaufarbeitungsanlagen, bevorzugt Schwefelsäurespaltanlagen, zurückgeführt werden.

## Claims

1. A process for the continuous preparation of oleum with a concentration of from 10 to 45 % by weight of $SO_3$ and/or of sulphuric acid with a concentration of from 94 to 100 % by weight of $H_2SO_4$ by combustion of sulphur with atmospheric oxygen according to the principle of combustion using greater or lesser quantities than required to react stoichiometrically, cooling of the sulphur dioxide-containing gases formed to between 390 °C and 480 °C, catalytic conversion of these cooled gases to sulphur trioxide-containing gases on a contact containing vanadium by applying the principle of single or

double contact catalysis, absorption of the sulphur trioxide-containing gases after cooling, optional separation of the liquids from the gases after absorption and power regeneration, characterised in that the combustion of sulphur with atmospheric oxygen is carried out by adding dry $SO_2$-containing gases which are not formed from this combustion of sulphur with atmospheric oxygen and which contain up to 5000 ppm $(NO)_x$, preferably less than 2000 ppm $(NO)_x$, calculated as NO.

**2.** A process according to claim 1, characterised in that dry decomposed gases from the thermal decomposition of spent sulphuric acids are used as dry $SO_2$-containing gases which may contain up to 5000 ppm $(NO)_x$, calculated as NO.

**3.** A process according to claim 2, characterised in that the decomposed gases contain 5 to 10% by volume of $O_2$, 5 to 8% by volume of $SO_2$, <200 ppm of CO, <1000 ppm of $(NO)_x$, <50 ppm of hydrocarbons and 82 to 90% by volume of $H_2O$, $N_2$ and $CO_2$.

**4.** A process according to claim 1, characterised in that exhaust gases from the combustion of material containing sulphur are used as dry $SO_2$-containing gases which may contain up to 5000 ppm $(NO)_x$.

**5.** A process according to claim 1, characterised in that the proportion of the quantity of $SO_2$ from the added dry $SO_2$-containing gases to the quantity of $SO_2$ from the combustion of sulphur is between 1:5 and 3:1.

**6.** A process according to claim 1, characterised in that the admission of the dry $SO_2$-containing gases which may contain up to 5000 ppm $(NO)_x$ takes place directly into the chamber for the combustion of sulphur.

**7.** A process according to claim 1, characterised in that the dry $SO_2$-containing gases are mixed with the air for combustion and the gas mixture is admitted into the chamber for the combustion of sulphur.

**8.** A process according to claim 1, characterised in that the combustion of sulphur is carried out at temperatures between 500 °C and 1000 °C (measured at the exit of the combustion chamber prior to cooling the gases), preferably between 700 °C and 950 °C.

**9.** A process according to claim 1, characterised in that the absorption of the $SO_3$-containing gases is carried out in oleum with a concentration of from 15 to 40 % by weight of $SO_3$, preferably 20 to 30 % by weight of $SO_3$.

**10.** A process according to claim 1, characterised in that the liquids separated from the gases are led back into sulphuric acid conversion plants, preferably sulphuric acid decomposition plants.

## Revendications

**1.** Procédé de préparation continue d'oléum d'une concentration de 10 à 45% en poids de $SO_3$ et/ou d'acide sulfurique d'une concentration de 94 à 100% en poids de $H_2SO_4$ par combustion du soufre avec l'oxygène de l'air selon le principe de combustion dans des quantités supérieures ou inférieures aux quantités stoechiométriques, refroidissement des gaz contenant du dioxyde de soufre obtenus à 390° C à 480° C, transformation catalytique de ces gaz refroidis en gaz contenant du trioxyde de soufre par contact avec un matériau contenant du vanadium selon l'utilisation du principe de catalyse de contact simple ou double, absorption des gaz contenant du trioxyde de soufre après refroidissement, éventuellement séparation des liquides à partir des gaz après l'absorption et récupération de l'énergie, caractérisé en ce que la combustion du soufre avec l'oxygène de l'air est effectuée sous addition de gaz secs contenant du $SO_2$, qui ne proviennent pas de cette combustion du soufre avec l'oxygène de l'air et contiennent jusqu'à 5000 ppm $(NO)_x$,de préférence moins de 2000 ppm $(NO)_x$, compté comme NO.

**2.** Procédé selon la revendication 1, caractérisé en ce que les gaz secs contenant du $SO_2$, qui peuvent contenir jusqu'à 5000 ppm de $(NO)_x$ compté comme NO, sont des gaz de dissociation secs provenant de la dissociation thermique des acides sulfuriques résiduaires.

3. Procédé selon la revendication 2, caractérisé en ce que les gaz de récupération contiennent jusqu'à 5 à 10% en volume de $O_2$, 5 à 8% en volume de $SO_2$, <200 ppm de CO, <1000 ppm de $(NO)_x$, <50 ppm de composés hydrocarbonés et 82 à 90% en volume de $H_2O$, $N_2$ et $CO_2$.

4. Procédé selon la revendication 1, caractérisé en ce que les gaz secs contenant du $SO_2$, qui peuvent contenir jusqu'à 5000 ppm $(NO)_x$, sont des gaz de combustion provenant de la combustion de matières sulfurées.

5. Procédé selon la revendication 1, caractérisé en ce que le rapport de la quantité de $SO_2$ des gaz contenant du $SO_2$ ajoutés, à la quantité de $SO_2$ provenant de la combustion du soufre, est de 1:5 à 3:1.

6. Procédé selon la revendication 1, caractérisé en ce que l'alimentation des gaz secs contenant du $SO_2$, qui peuvent contenir jusu'à 5000 ppm de $(NO)_x$, a lieu directement dans la chambre de combustion du soufre.

7. Procédé selon la revendication 1, caractérisé en ce que les gaz secs contenant du $SO_2$ sont mélangés à l'air de combustion et que le mélange de gaz est introduit dans la chambre de combustion du soufre.

8. Procédé selon la revendication 1, caractérisé en ce que la combustion du soufre est effectuée à des températures entre 500° c et 1000° C (mesurées à la sortie de la chambre de combustion avant le refroidissement du gaz), de préférence entre 700° C et 950° C.

9. Procédé selon la revendication 1, caractérisé en ce que l'absorption des gaz contenant du $SO_2$ est effectuée dans de l'oléum à une concentration de 15 à 40% en poids de $SO_3$, de préférence 20 à 30% en poids de $SO_3$.

10. Procédé selon la revendication 1, caractérisé en ce que les liquides séparés des gaz sont ramenés dans les installations pour le traitement d'acide sulfurique, de préférence dans des installations de dissociation de l'acide sulfurique.

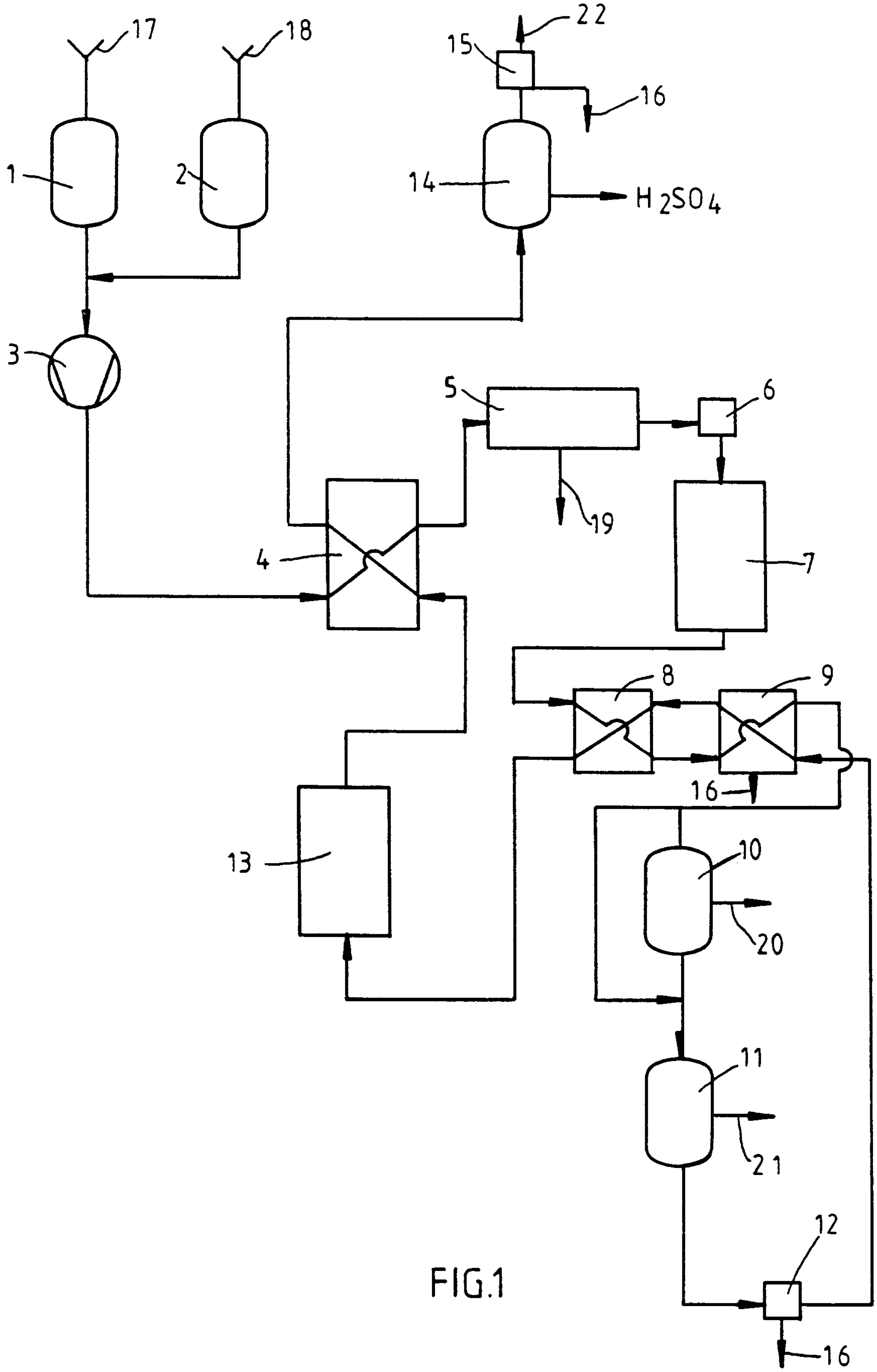


FIG.1